(19) Europäisches Patentamt
European Patent Office
Office européen des brevets

(11) Numéro de publication : **0 141 763 B1**

(12) # FASCICULE DE BREVET EUROPÉEN

(45) Date de publication du fascicule du brevet : **02.12.87**

(51) Int. Cl.⁴ : **C 08 L 77/00**, C 08 K 3/02, C 08 K 3/00, C 08 K 5/00, C 08 K 9/10

(21) Numéro de dépôt : **84420177.2**

(22) Date de dépôt : **17.10.84**

(54) **Compositions à base de polyamide ignifuge.**

(30) Priorité : **21.10.83 FR 8317022**

(43) Date de publication de la demande : **15.05.85 Bulletin 85/20**

(45) Mention de la délivrance du brevet : **02.12.87 Bulletin 87/49**

(84) Etats contractants désignés : **AT BE CH DE FR GB IT LI LU NL SE**

(56) Documents cités :
**EP-A- 0 071 788**
**FR-A- 2 367 100**

(73) Titulaire : **RHONE-POULENC CHIMIE**
**25, quai Paul Doumer**
**F-92408 Courbevoie Cedex (FR)**

(72) Inventeur : **Giroud-Abel, Bruno 7-9 Chemin de Charrière Blanche**
**Résidence du Parc des Cèdres Bâtiment C**
**F-69130 Ecully (FR)**

(74) Mandataire : **Trolliet, Maurice et al**
**RHONE-POULENC INTERSERVICES Service Brevets Chimie Centre de Recherches de Saint-Fons B.P. 62**
**F-69192 Saint-Fons Cédex (FR)**

**EP 0 141 763 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet de nouvelles compositions à base de polyamide ignifugé au moyen de phosphore rouge destinées notamment à la fabrication d'articles pour les industries électrique et électronique.

On sait que l'adjonction de phosphore rouge dans des compositions à base de polyamide permet d'atteindre un degré élevé d'ignifugation. Toutefois, l'emploi du phosphore rouge présente un inconvénient sérieux résidant dans le dégagement d'hydrogène phosphoré très toxique qui se forme sous l'action des traces d'eau présentes dans le polymère et de la chaleur élevée nécessaire à sa transformation. On sait également que l'on peut pallier à cet inconvénient en incorporant dans les compositions ignifugées certaines substances, ayant pour fonction de fixer l'hydrogène phosphoré, telles que des composés métalliques. Dans le brevet américain nº 3 883 475, on a préconisé d'utiliser avantageusement l'oxyde cuivrique. Dans le brevet français nº 2 367 100, on a proposé une amélioration consistant à faire appel à de l'oxyde de cadmium à la place du CuO ; l'oxyde de cadmium en plus de son efficacité (au moins égale à celle de CuO) pour inhiber le dégagement de phosphine, conduit en outre à des articles présentant une résistance au cheminement de l'arc (au sens de la norme NF C 26220) particulièrement élevée, égale ou supérieure à 400 volts dans le cas de compositions non chargées et à 375 volts dans le cas de compositions chargées avec plus de 25 % en poids de fibres de verre.

On a proposé encore dans le brevet français précité d'améliorer encore les résultats obtenus au moyen d'oxyde de cadmium en procédant à un enrobage du phosphore rouge à l'aide d'une matière polymérique.

L'oxyde de cadmium utilisé dans les compositions ignifugées de l'art antérieur pose cependant un problème d'emploi lié à une certaine toxicité de cet oxyde qui est de nature à freiner le développement de cette technique.

Un des objectifs que vise la présente invention est de fournir un produit de remplacement de l'oxyde de cadmium qui soit non toxique et présente un comportement en matière d'inhibition du dégagement de phosphine et de résistance au cheminement d'arc au moins comparable à celui de l'oxyde remplacé.

Un autre objectif que vise la présente invention est de fournir de nouveaux adjuvants dont l'utilisation pourra se faire sans inconvénient sur les valeurs des propriétés mécaniques, en particulier sur les valeurs de la résilience, des articles conformés issus des compositions ignifugées.

Un autre objectif que vise encore la présente invention est de fournir de nouveaux adjuvants permettant de contrôler et de limiter l'évolution des caractéristiques moléculaires du polyamide ignifugé à l'extrusion et à l'injection. De manière générale, les polyamides, lors de leur transformation, voient toujours évoluer leurs caractéristiques moléculaires. Cette évolution est plus ou moins importante selon notamment la balance des groupements terminaux du polyamide, la teneur en humidité résiduelle, la température de la masse fondue lors de la transformation, la durée de la transformation, la nature et le taux des additifs présents et elle entraîne une modification des caractéristiques rhéologiques du polymère qui peut être indésirable pour réaliser un bon moulage et pour obtenir des articles d'aspect correct et de qualité optimale. En présence de phosphore rouge, cette évolution des caractéristiques moléculaires du polyamide est particulièrement marquée et on note une augmentation importante de l'indice de viscosité et de la viscosité apparente en phase fondue avec pour conséquences une marche en extrusion plus difficile et irrégulière, des conditions d'injection plus sévères et l'obtention d'articles moulés de moins bel aspect de surface. L'oxyde de cadmium s'est révélé comme un produit susceptible d'agir rapidement (le temps d'une extrusion ou d'une injection) pour contrôler et limiter cette évolution. L'objectif de la demanderesse est donc de fournir un produit de remplacement aussi actif que l'oxyde de cadmium dans ce domaine particulier touchant aux caractéristiques rhéologiques du polyamide ignifugé à l'aide de phosphore rouge.

Il a maintenant été trouvé que l'on pouvait arriver à la satisfaction de ces objectifs grâce à l'emploi, comme nouveaux adjuvants, d'au moins un composé à base de lanthanide.

Plus précisément la présente invention concerne des compositions à base de polyamide ignifugé au moyen de phosphore rouge, caractérisées en ce qu'elles comprennent une quantité efficace d'au moins un composé à base de lanthanide.

Dans le présent texte on appellera lanthanide, les métaux de la classification périodique des éléments ayant les numéros atomiques allant de 57 à 71 ainsi que l'yttrium qui possède des propriétés voisines bien qu'ayant un numéro atomique de 39.

L'expression « composé à base de lanthanide » donnée ci-avant signifie :

— un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium, et yttrium ; l'expression « au moins un composé à base de lanthanide » signifie alors que l'on peut engager, outre un seul dérivé, un mélange de dérivés organiques ou un mélange de dérivés inorganiques ou un mélange de dérivés organiques et inorganiques de l'un quelconque des lanthanides précités ;

— un mélange de dérivés organiques et/ou inorganiques de plusieurs de ces lanthanides ; l'expression « au moins un composé à base de lanthanide » signifie que l'on peut engager, outre un seul

mélange, une association de plusieurs mélanges de ce type.

En général, en raison des quantités relatives des composés des divers lanthanides dans les minerais les plus courants, notamment dans la monazite et la bastnaesite, lorsque l'on met en œuvre un dérivé d'un seul lanthanide, ce dernier est de préférence le cérium, le lanthane, le praséodyme et le néodyme. Le cérium et le lanthane sont, parmi ces métaux, les plus abondants et conviennent tout particulièrement bien.

Des mélanges de dérivés de plusieurs lanthanides peuvent aussi être utilisés. Il peut en effet être avantageux de ne pas procéder à la séparation longue et coûteuse de tous les lanthanides présents en relativement faibles quantités dans les minerais couramment traités. En pareil cas, on fait appel généralement aux mélanges suivants :

— mélange de dérivés du cérium et d'un ou plusieurs des autres lanthanides ;

— mélange de dérivés de lanthane et d'un ou plusieurs autres lanthanides choisis parmi le praséodyme, le néodyme, le prométhium, le samarium, l'europium, le gadolinium, le terbium, le dysprosium, l'holmium, l'erbium, l'ytterbium, le thulium, le lutétium et l'yttrium ;

— mélange de dérivés du praséodyme et d'un ou plusieurs autres lanthanides choisis parmi le néodyme, le prométhium, le samarium, l'europium, le gadolinium, le terbium, le dysprosium, l'holmium, l'erbium, l'ytterbium, le thulium, le lutétium et l'yttrium ;

— mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium et l'yttrium.

Quand de tels mélanges de dérivés de plusieurs lanthanides sont mis en œuvre dans les compositions selon l'invention, le cérium et/ou le lanthane et/ou le praséodyme et/ou le néodyme représentent généralement au moins 40 % en moles du total des lanthanides.

Par dérivé organique de lanthanide, on entend plus particulièrement les sels des divers acides carboxyliques, les dérivés métalliques des composés phénoliques, les mercaptides et les chélates des composés β-dicarbonylés.

Plus précisément, les dérivés organiques de lanthanide sont choisis parmi :

— les sels de lanthanide :

des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone ;

des acides benzoïque, naphtoïque-1, naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone ;

des monesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides carboxyliques hétérocycliques notamment de ceux dérivés de la pyridine, du furanne, du thiophène, du pyrrole et du pyranne, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone ;

— les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle ;

— les mercaptides de lanthanide notamment ceux qui dérivent des acides thioglycolique ou thiomaliqùe et de leurs esters d'alkyle (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone ;

— les chélates de lanthanide de composés β-dicarbonylés notamment ceux qui dérivent des composés de formule générale (I) :

$$R_1—CO—CHR_2—CO—R_3 \qquad (I)$$

dans laquelle :

— $R_1$ et $R_3$, identiques ou différents, représentent :

un groupement alkyle, linéaire ou ramifié, ayant 1 à 36 atomes de carbone, éventuellement substitué par un ou des atomes d'halogène,

un groupement alkényle, linéaire ou ramifié, ayant 3 à 36 atomes de carbone, éventuellement substitué par un ou des atomes d'halogènes,

un radical aryle ou un radical aryle portant sur le cycle aromatique un ou plusieurs substituants tels que :

les radicaux alkyles ayant 1 à 6 atomes de carbone, éventuellement substitués par un ou des atomes d'halogènes,

les radicaux alkényles ayant 2 à 6 atomes de carbone, éventuellement substitués par un ou des atomes d'halogènes,

le groupement nitro,

le groupement —CHO,

le groupement —COOH,

les groupements alkoxy ayant 1 à 6 atomes de carbone,

les groupements —$COOR_4$, $R_4$ étant un radical alkyle ayant 1 à 12 atomes de carbone ou alkényle ayant 2 à 12 atomes de carbone,

le groupement OH,

les atomes d'halogènes,

un radical aralkyle dont la partie aliphatique comporte de 1 à 12 atomes de carbone et dont la partie cyclique peut comporter un ou plusieurs des substituants indiqués précédemment,

un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

un enchaînement de plusieurs des radicaux indiqués précédemment,

les différents radicaux aliphatiques précédemment définis pouvant comporter un ou plusieurs atomes d'oxygène —O— ou de soufre —S— ou groupements carbonyles —CO— ou carboxylates —COO— ;

— $R_2$ représente un atome d'hydrogène.

Parmi les dérivés organiques de lanthanide qui peuvent être utilisés dans les compositions selon l'invention, on choisit fréquemment, en particulier pour des raisons pratiques ou pour des raisons économiques de disponibilité ou de prix :

— les sels de lanthanide :

des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone ;

des acides mercaptomonocarboxyliques ayant de 2 à 6 atomes de carbone ou mercaptodicarboxyliques ayant de 3 à 6 atomes de carbone ;

des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone ;

des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone ;

les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

A titre d'exemples non limitatifs de dérivés organiques des lanthanides on peut citer :

— les sels de lanthanide, notamment de cérium, de lanthane, de praséodyme et de néodyme, des acides propionique, hexanoïques, n.octanoïque, éthyl-2 hexanoïque, isooctanoïque, nonanoïques, décanoïques, laurique, stéarique, oléique, ricinoléïque, margarique, tétradécanoïques, hydroxy-12 stéarique, docosanoïques, docosène-13-oïque (acide érucique), chloro-2 décanoïque, octyl-2 décanoïque, hydroxy-2 hexanoïque, thioglycolique, mercaptopropionique, thiomalique, cyclohexyl-6 hexanoïque, benzoïque, phénylacétique, phényl-2 propanoïque, méthyl-2 benzoïque, méthyl-4 benzoïque, phénoxy-2 benzoïque, propyl-4 benzoïque, méthoxy-4 benzoïque, tertiobutyl-4 benzoïque, salicylique, tertiobutyl-5 salicylique, hydroxy-4 méthoxy-3 benzoïque, diméthoxy-3,4 benzoïque, naphtoïque-1, naphtoïque-2, cyclohexane-carboxylique, nicotinique, isonicotinique, méthyl-4 furanne-carboxylique-3, du maléate de monoisooctyle, du maléate de mono(éthoxy-2 éthyle), du phtalate de monobutyle, du thiomalate de monobutyle, du thiomalate de monohexyle ;

— les phénolates de lanthanides, notamment de cérium, de lanthane, de praséodyme et de néodyme des composés phénoliques suivants : phénol, crésols, éthylphénols, xylénols, butylphénols, isopentylphénols, isooctylphénols, tertiononylphénols, décylphénols, dodécylphénols, tertiooctylphénols, cyclohexyl-4 phénol, phényl-4 phénol, ditertiononylphénols, méthyl-isohexylphénols ;

— les chélates de lanthanides, notamment de cérium de lanthane, de praséodyme et de néodyme des β-dicétones suivantes : l'heptanedione-2,4 ; la décanedione-2,4 ; la méthyl-2 décène-2-dione-6,8 ; la méthyl-2 nonène-2 dione-6,8 ; la stéaroylacétone ; la stéaroyl-1 octanone-2 ; le dioxo-7,9 décanoate d'éthyle ; la benzoylacétone ; l'acétylacétone ; la benzoyl-1 octanone-2 ; la diphényl-1,4 butanedione-1,3 ; la stéaroylacétophénone ; la palmitoylacétophénone ; la benzoyl-1 méthyl-4 pentanone ; le benzoyl-octacosanoyl-méthane ; le paraméthoxybenzoyl-stéaroylméthane ; le dibenzoylméthane ;

— les mercaptides de lanthanides, notamment de cérium, de lanthane, de praséodyme et de néodyme de l'acide thioglycolique, du thioglycolate d'isooctyle, du thioglycolate d'octadécyle, du thioglycolate de benzyle, du thioglycolate de lauryle, du dithioglycolate de cyclohexanediol-1,4, du thioglycolate de tertiobutyl-4 cyclohexyle, de l'acide thiomalique, du thiomalate d'hexyle, du thiomalate d'éthyl-2 hexyle, du thiomalate de dodécyle, du thiomalate de benzyle, du thiomalate de cyclohexyle, du thiomalate de propanediol-1,3, du thiomalate de butanediol-1,4, du thiomalate d'hexanediol-1,6.

Les dérivés organiques des lanthanides, qui ne sont pas directement disponibles, sont préparés par des méthodes classiques, telles que la réaction d'un acide carboxylique ou de son anhydride, d'un composé phénolique, d'un acide mercaptocarboxylique (ou d'un de ses esters) ou d'une β-dicétone sur un oxyde ou un hydroxyde de lanthanide, ou selon le cas sur un mélange de tels oxydes ou hydroxydes, dans un milieu solvant approprié et en chauffant si nécessaire.

Par dérivé inorganique de lanthanide, on entend plus particulièrement les oxydes, les hydroxydes, les sels d'hydracides minéraux et les sels d'oxyacides minéraux.

Plus précisément, on utilise par exemple comme sels de lanthanide d'hydracides minéraux : les chlorure, bromure, iodure, sulfure, séléniure et tellurure ; comme sels de lanthanide d'oxyacides minéraux : les sulfite, sulfate, sulfonate, nitrite, nitrate, phosphite, phosphate, pyrophosphate, carbonate, perchlorate, antimoniate, arséniate, sélénite, sélénate, vanadate et tungstate.

Parmi les dérivés inorganiques de lanthanide qui peuvent être utilisés dans les compositions selon l'invention, on choisit fréquemment, en particulier pour des raisons pratiques ou pour des raisons économiques de disponibilité ou de prix, les oxydes, les chlorures, les sulfates ou les nitrates de lanthanide.

Dans les dérivés de lanthanide utilisés dans les compositions selon l'invention, le lanthanide peut se trouver aux différents degrés d'oxydation qu'il possède éventuellement ; le plus fréquemment il se trouve aux degrés d'oxydation III ou IV.

Conformément à une mise en œuvre très préférentielle de la présente invention, on fait appel à une quantité efficace d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III.

La quantité de composé(s) à base de lanthanide mise en œuvre peut varier dans de très larges limites. Plus précisément, cette quantité est déterminée de manière à apporter de $0,1 \cdot 10^{-3}$ à $100 \cdot 10^{-3}$ atome-grammes de métal appartenant au groupe des lanthanides pour 100 g de polyamide. De préférence, cette quantité est déterminée de manière à apporter de $0,2 \cdot 10^{-3}$ à $30 \cdot 10^{-3}$ atome-grammes de métal du groupe des lanthanides pour 100 g de polyamide. De manière plus préférentielle encore, cette quantité est déterminée de manière à apporter de $0,3 \cdot 10^{-3}$ à $10 \cdot 10^{-3}$ atome-grammes de métal du groupe des lanthanides pour 100 g de polyamide.

Les polyamides à ignifuger visés dans la présente invention comprennent : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acides ω-aminoalcanoïques comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

A titre d'illustration des polyamides obtenus par polycondensation de diacides et de diamines, on citera par exemple : le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique), le nylon 6,12 (polymère d'hexaméthylènediamine et d'acide dodécanedioïque).

A titre d'illustration des polyaminoacides qui peuvent convenir, on citera : le nylon 4 (polymère d'acide amino-4 butanoïque ou de γ-butyrolactame), le nylon 5 (polymère d'acide amino-5 pentanoïque ou de δ-amylolactame), le nylon 6 (polymère d'ε-caprolactame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), le nylon 11 (polymère d'acide amino-11 undécanoïque), le nylon 12 (polymère d'acide amino-12 dodécanoïque ou de laurolactame).

A titre d'illustration des copolyamides, on citera par exemple : le nylon 6,6/6,10 (copolymère

d'hexaméthylènediamine, d'acide adipique et d'acide sébacique), le nylon 6,6/6 (copolymère d'hexaméthylènediamine, d'acide adipique et de caprolactame).

Les polyamides à ignifuger qui sont tout spécialement visés dans la présente invention sont le nylon 6,6, le nylon 6,10, le nylon 6, le nylon 6,6/6,10 et le nylon 6,6/6.

L'expression « phosphore rouge » au sens de la présente invention désigne les diverses variétés allotropiques colorées du phosphore (phosphore rouge, violet ou noir) commercialisées sous l'appellation de phosphore rouge.

La quantité de phosphore rouge est généralement comprise entre 0,02 et 25 % en poids par rapport au poids total de la composition ; de préférence cette quantité est comprise entre 0,2 et 15 % en poids. D'une manière générale, il est souhaitable d'utiliser le phosphore rouge sous forme finement divisée, par exemple sous forme de particules de diamètre moyen n'excédant pas 200 µm et de préférence compris entre 1 et 100 µm.

S'agissant du composé à base de lanthanide, il peut se présenter sous une forme solide ou pâteuse. Dans le cas d'un composé solide, ce dernier est utilisé en général sous forme de particules de diamètre moyen n'excédant pas 200 µm et de préférence compris entre 1 et 100 µm. Quand le composé utilisé est disponible sous forme anhydre ou sous forme cristallisée avec des molécules d'eau, on préfère mettre en œuvre le composé anhydre pour éviter tout dégagement d'eau lors de la transformation.

Les compositions conformes à la présente invention peuvent être préparées par simple mélange des divers constituants de toutes les manières appropriées permettant d'obtenir une composition homogène. De manière préférentielle, on réalise le mélange des divers constituants sous forme de poudre ou de granulés en opérant d'abord à froid un pré-mélange dans un mélangeur classique, puis en homogénéisant ensuite l'ensemble par un malaxage à chaud dans une extrudeuse à une ou plusieurs vis. A l'issue de ce traitement on obtient des joncs qui sont refroidis à l'eau puis découpés en granulés, ces derniers pouvant éventuellement être soumis ensuite à un séchage. Les compositions selon l'invention peuvent être préparées encore en confectionnant un mélange maître, présenté sous forme de granulés à base d'une partie du polyamide à ignifuger, de phosphore rouge et du composé à base de lanthanide qui sera mélangé ensuite, avant mise en œuvre, avec des granulés du reste du polyamide à ignifuger.

Ces compositions ont été définies ci-dessus par leurs constituants essentiels. Il va sans dire que l'on ne sortirait pas du cadre de l'invention en modifiant ces compositions de la manière indiquée ci-après. Ainsi, s'agissant par exemple du phosphore rouge, on peut soit utiliser le phosphore rouge tel quel, soit utiliser, et il s'agit là d'une mesure préférentielle, des particules de phosphore rouge enrobées au moyen d'une pellicule de polymère. Parmi ces polymères, on peut citer notamment : les résines époxy (cf. brevet français n° 2 314 221), des polymères ayant des liaisons insaturées maléiques, fumariques ou allyliques (cf. brevet français n° 2 314 219), des polyesters saturés de point de fusion compris entre 50° et 90 °C et de masse moléculaire inférieure à 10 000 (cf. brevet français n° 2 373 575), des polycondensats phénol-formaldéhyde thermoplastiques de type novolaque (cf. brevet français n° 2 344 615), des polycondensats phénol-isobutyraldéhyde thermoplastiques (cf. demande de brevet européen n° 82 106 329.4 publiée sous le numéro 0 071 788) ; l'emploi des polycondensats phénol-formaldéhyde thermoplastiques constitue une mesure particulièrement préférée pour la mise en œuvre de la présente invention. La quantité de polymère mise en œuvre pour enrober le cas échéant les particules de phosphore peut varier entre de larges limites. Généralement cette quantité représente 5 à 50 % du poids total du mélange phosphore rouge/polymère enrobant. A noter que l'on peut utiliser sans inconvénient des quantités de polymères enrobant plus importantes allant jusqu'à représenter 90 % du poids total du mélange phosphore rouge/polymère enrobant.

Par ailleurs, les compositions selon l'invention, quand elles sont destinées par exemple à l'obtention d'objets conformés, peuvent renfermer divers additifs : elles peuvent ainsi contenir des charges renforçantes ou gélifiantes telles que des fibres de verre ou d'amiante, des microbilles de verre, du kaolin, du talc, de la silice, des micas, des bentonites, des bentones ou des mélanges de ces espèces. Parmi les charges précitées, les plus couramment utilisées sont les fibres de verre ; ces fibres ont en général un diamètre moyen compris entre 1 et 15 µm et une longueur comprise entre 2 et 8 mm. Il est avantageux, pour obtenir des articles doués de propriétés mécaniques optimales, d'utiliser des fibres ensimées, par exemple au moyen de résines époxy, de résines polyesters, de résines polyuréthannes ou de résines vinyliques, ces résines étant généralement associées à des agents de pontage du type aminosilane, Les proportions de charges peuvent varier entre par exemple 15 % et 60 % en poids par rapport au poids total de la composition.

On peut également faire appel à d'autres additifs tels que des lubrifiants, des stabilisants, des agents renforçateurs de chocs, des pigments ou colorants, des agents antistatiques, des agents de cristallisation : ces derniers additifs ainsi que leur emploi sont largement décrits dans la littérature.

Les compositions conformes à l'invention peuvent être transformées en articles finis ou semi-finis par application des techniques habituelles d'injection ou d'extrusion. Ainsi qu'il a été indiqué, un des avantages de ces compositions réside dans le fait que cette transformation qui s'effectue en général à une température de l'ordre de 200 à 320 °C ne s'accompagne que d'une très faible émission dans l'atmosphère d'hydrogène phosphoré : celle-ci est en général inférieure à 3 ppm et même à 0,1 ppm ; la borne de 0,3 ppm représente la concentration maximale à ne pas dépasser (cf. l'ouvrage Sax, Dangerous properties of industrial materials, 3$^{e}$ édition, pages 1019 et 1020). Pour des teneurs en phosphore

adéquates, les articles obtenus sont résistants au feu et ils ne conduisent pas, sous l'action d'une flamme, à la formation de gouttelettes de matière fondue, éventuellement enflammée. Ils présentent une excellente résistance au cheminement d'arc qui peut être supérieure à celle enregistrée avec de l'oxyde de cadmium. On constate encore que les articles ignifugés obtenus présentent aussi une excellente résilience et une bonne tenue au vieillissement thermique sous air : les performances enregistrées en la matière sont généralement supérieures à celles obtenues en utilisant l'oxyde de cadmium. Sur le plan du contrôle et de la limitation de l'évolution des caractéristiques moléculaires du polyamide ignifugé à la transformation, on observe que les composés à base de lanthanide présentent la même efficacité que l'oxyde de cadmium. Ainsi donc, les composés à base de lanthanide non seulement présentent les mêmes avantages que l'oxyde de cadmium sur le plan de l'inhibition du dégagement de phosphine et sur celui du contrôle et de la limitation de l'évolution des caractéristiques moléculaires du polyamide ignifugé, mais encore ils sont capables dans certains cas (résistance au cheminement d'arc, résilience, tenue au vieillissement) de procurer de meilleures performances. En définitive, on aboutit avec les composés à base de lanthanide, en comparaison avec ce qui se passe en présence d'oxyde de cadmium, à un meilleur compromis de propriétés et il s'agit là d'un résultat tout à fait inattendu.

Les compositions ignifugées selon la présente invention conviennent particulièrement bien pour l'obtention d'articles conformés utilisables dans les industries de l'électricité (par exemple industries électrique et électronique, électroménager, radio, automobile). Les caractéristiques de ces compositions permettent également de confectionner des articles par filage et filmage.

Les exemples non limitatifs suivants montrent comment la présente invention peut être mise en œuvre pratiquement.

Avant de décrire ces exemples, on va montrer à l'aide des essais A à G décrits ci-après l'incidence que peuvent avoir les différents constituants (autres que le polyamide) d'une composition témoin comprenant :

— du nylon 6,6,
— du phosphore rouge enrobé au moyen d'un polycondensat phénol-formaldéhyde,
— des fibres de verre,
— de l'oxyde de cadmium,

sur l'évolution de l'indice de viscosité et de la viscosité apparente du polyamide.

## Essais A à G

1. Description des matières premières

— Nylon 6,6 (polymère d'hexaméthylènediamine et d'acide adipique) : il s'agit d'un produit présentant un indice de viscosité de 133 ml/g (déterminé selon la norme ISO R 307, édition de 1977, sur la partie soluble dans l'acide formique à 90 %) ;

— phosphore rouge enrobé : il s'agit d'une composition, qui sera désignée dans la suite par l'expression mélange-maître phosphore, contenant 60 % en poids de phosphore rouge ayant une granulométrie moyenne de 20 à 30 µm enrobé par 40 % en poids d'un polycondensat phénol-formaldéhyde ayant un point de fusion de 80 °C et un poids moléculaire de 800 (résine commercialisée par la Société Rhône-Poulenc sous la marque Phénorez PB 71 DA). Cet enrobage est effectué comme suivant : on mélange intimement, à 25 °C, 60 parties en poids de phosphore rouge avec 40 parties en poids de résine Phénorez par agitation sur rouleaux durant 12 heures ; on verse ensuite le mélange sur des plaques revêtues de papier aluminium sur une épaisseur de 1 cm ; on place à l'étuve à 130 °C pendant 3 heures ; on obtient des plaques que l'on casse en fragments ;

— fibres de verre : il s'agit de fibres courtes ayant un diamètre moyen de 10 µm et une longueur comprise entre 3 et 6 mm, comportant un ensimage pour polyamide, commercialisées par la Société Owens Corning Fiberglas sous la référence R 17 BX 1 ;

— oxyde de cadmium : il se présente sous forme de particules dont le diamètre moyen n'excède pas 100 µm.

2. Contenu de ces essais

essai A : on extrude le nylon 6,6 seul dans les conditions opératoires décrites ci-après ;

essai B : on prépare une composition à partir de : 69 parties en poids de nylon 6,6 + 31 parties en poids de fibres de verre + 0,27 partie en poids d'additif lubrifiant (cire-ester issue de l'acide béhénique et/ou de l'acide montanique) ;

essai C : on prépare une composition à partir de : 69 parties en poids de nylon 6,6 + 31 parties en poids de fibres de verre + 0,27 partie en poids de cire-ester + 0,345 partie en poids d'oxyde de cadmium ($3{,}9 \cdot 10^{-3}$ atome-grammes de cadmium/100 g de nylon 6,6) ;

essai D : on prépare une composition à partir de 95 parties en poids de la composition de l'essai B et de 5 parties en poids de résine Phénorez : la composition finale va contenir : 65,37 parties en poids de nylon 6,6 + 29,37 parties en poids de fibres de verre + 0,26 partie en poids de cire-ester + 5 parties en poids de résine Phénorez ;

essai E : on prépare une composition à partir de 95 parties en poids de la composition de l'essai B, de 5 partie en poids de résine Phénorez et de 0,327 partie en poids d'oxyde de cadmium ; la composition finale va contenir : 65,37 parties en poids de nylon 6,6 + 29,37 parties en poids de fibres de verre + 0,26 partie en poids de cire-ester + 5 parties en poids de résine Phénorez + 0,327 partie en poids d'oxyde de cadmium ($3{,}9 \cdot 10^{-3}$ atome-grammes de cadmium/100 g de nylon 6,6) ;

essai F : on prépare une composition à partir de 88,33 parties en poids de la composition de l'essai B et de 11,67 parties en poids de mélange-maître phosphore ; la composition finale va contenir : 60,78 parties en poids de nylon 6,6 + 27,31 parties en poids de fibres de verre + 0,24 partie en poids de cire-ester + 11,67 parties en poids de mélange-maître phosphore (phosphore rouge : 7 parties en poids ; résine Phénorez : 4,67 parties en poids) ;

essai G : on prépare une composition à partir de 88,33 parties en poids de la composition de l'essai B, de 11,67 parties en poids de mélange-maître phosphore et de 0,304 partie en poids d'oxyde de cadmium ; la composition finale va contenir : 60,78 parties en poids de nylon 6,6 + 27,31 parties en poids de fibres de verre + 0,24 partie en poids de cire-ester + 11,67 parties en poids de mélange-maître phosphore (phosphore rouge : 7 parties en poids ; résine Phénorez : 4,67 parties en poids) + 0,304 partie en poids d'oxyde de cadmium ($3{,}9 \cdot 10^{-3}$ atome-grammes de cadmium/100 g de nylon 6,6) ;

3. Mode opératoire général et contrôles effectués

Les compositions des essais B à G sont préparées de la manière suivante :

On réalise d'abord un pré-mélange à sec, à 25 °C, des divers constituants par passage dans un mélangeur de marque Moritz.

Ce pré-mélange est ensuite malaxé à l'état fondu dans une extrudeuse-dégazeuse de marque Prodex comportant une vis de diamètre D égal à 65 mm et de longueur égale à 24 D ; la vis utilisée est une vis cylindro-conique ayant un profil adapté pour le travail des polyamides ; l'extrudeuse est équipée par ailleurs d'une filière à deux trous de 5 mm de diamètre ; les conditions de l'extrusion sont les suivantes :

| | |
|---|---|
| — température | 270°-330 °C |
| — vide | $944 \cdot 10^2$ Pa |
| — vitesse de la vis | 70 t/min. |

Pour chaque essai on note la pression matière en bout de vis et le débit matière. Dans l'essai A, le mode opératoire ne consiste qu'à opérer un passage sur l'extrudeuse Prodex. Le produit recueilli sous forme de joncs est refroidi par passage dans un bain d'eau froide, puis il est granulé et séché.

Sur la poudre à mouler ainsi obtenue, on détermine la teneur en eau, l'indice de viscosité du nylon 6,6 et la viscosité apparente à 290 °C, sous un gradient de vitesse $\gamma = 240\ s^{-1}$, au bout d'un temps de séjour dans le rhéomètre de 5 min.

Pour déterminer l'indice de viscosité, le temps de dissolution dans l'acide formique doit être ajusté pour obtenir une dissolution complète. Ainsi dans le cas des compositions comprenant du phosphore rouge et ne contenant pas d'oxyde de cadmium (qui permet de limiter comme on va le voir l'évolution des caractéristiques moléculaires du polyamide à l'extrusion) il est nécessaire d'une part de porter le temps habituel de dissolution, qui est habituellement de 2 heures à 25 °C, à 3 heures et d'autre part de chauffer à 40 °C.

La viscosité apparente à l'état fondu de la poudre à mouler est déterminée à l'aide d'un rhéomètre Instrom 3211 équipé d'une filière ayant une longueur de 60 mm et un diamètre de 1 mm. Avant d'effectuer les mesures, les granulés de la poudre à mouler sont séchés 3 heures à 150 °C sous vide. La température choisie pour les mesures (290 °C) correspond à la température moyenne représentative des conditions d'extrusion et d'injection. Les mesures sont effectuées au bout d'un temps de séjour de 5 mn dans le rhéomètre (après la charge des granulés) ; cette durée correspond à la durée moyenne représentative des conditions d'injection sur presse. La détermination de la viscosité apparente permet ainsi d'apprécier la stabilité de la poudre à mouler en phase fondue.

On détermine encore l'indice de viscosité du nylon 6,6, mais cette fois, sur éprouvette moulée. Ces éprouvettes sont préparées à l'aide d'une presse à vis de marque DK, type 60. Dans cette presse, les granulés de la poudre à mouler sont fondus à une température de 280 °C, tandis que le moule est maintenu à une température de 80 °C ; la pression d'injection est de 80 MPa ; la durée du cycle d'injection est de 17 s.

4. Résultats des essais A à G

Les résultats obtenus sont rassemblés dans le tableau 1 donné ci-après.

(Voir Tableau 1, page 9)

Tableau 1

| Essais | Extrusion | | Poudre à mouler | | | Indice de viscosité sur éprouvettes moulées ml/g |
|---|---|---|---|---|---|---|
| | Pression matière en bout de vis MPa | Débit matière kg/h | Teneur en eau % en poids | Indice de viscosité ml/g | Viscosité apparente Pa.s | |
| A | 1 | 27,3 | < 0,1 | 142 | | |
| B | 5 | 29,1 | < 0,1 | 142 | | |
| C | 5 | 30,3 | < 0,1 | 134 | | |
| D | 5 | 30,3 | < 0,1 | 142 | | |
| E | 5 | 33,0 | < 0,1 | 134 | | |
| F | 6 | 33,0 | < 0,1 | 163 | 700 | 202 |
| G | 5 | 51,0 | < 0,1 | 143 | 250 | 152 |

Les essais A à E montrent que, parmi tous les constituants de la composition de l'essai F (présents dans le même rapport pondéral vis-à-vis du polyamide), seul le phosphore rouge entraîne une importante augmentation de l'indice de viscosité du nylon 6,6 au cours de l'opération d'extrusion. On va bien au-delà de l'augmentation qui peut être attribuée à la légère post-condensation que subit normalement le polyamide lors d'une extrusion sous vide. L'essai G montre que l'oxyde de cadmium permet de contrôler et de limiter efficacement cette importante évolution, tant au cours de l'extrusion (cf. valeur de l'indice de viscosité déterminée sur la poudre à mouler), qu'au cours d'une opération d'injection (cf. valeur de l'indice de viscosité déterminée sur éprouvette moulée). A l'extrusion, la composition de l'essai F se caractérise, par rapport à la composition de l'essai G, par une levée plus délicate des joncs, par des irrégularités de débit, par une pression matière en bout de vis supérieure et par un débit matière inférieur de plus de 30 %.

Exemples 1 à 3 et essai comparatif H

1. Contenu de ces exemples et essai

Cette partie expérimentale va permettre de situer le comportement de compositions à base de polyamide et de fibres de verre, ignifugées au moyen de phosphore rouge enrobé, dans lesquelles l'adjuvant permettant d'inhiber le dégagement de phosphine à la transformation (extrusion et injection) et permettant en outre de contrôler et de limiter l'évolution des caractéristiques moléculaires du polyamide au cours de la transformation est :

de l'oxyde de cadmium (CdO) (essai H) ;
du chlorure de cérium III ($CeCl_3$) (exemple 1) ;
du stéarate de cérium III [$Ce(C_{17}H_{35}COO)_3$] (exemple 2) ;
du stéarate de lanthane III [$La(C_{17}H_{35}COO)_3$] (exemple 3).

Ces différents adjuvants sont introduits dans les compositions en quantités telles qu'ils apportent $2,3 \cdot 10^{-3}$ atome-gramme de métal (Cd, Ce ou La) pour 100 g de polyamide.

Plus précisément, on a préparé les compositions obtenues à partir des constituants suivants :

essai H : 63,73 parties en poids de nylon 6,6 + 25 parties en poids de fibres de verre + 0,259 partie en poids de cire-ester + 10,82 parties en poids de mélange-maître phosphore (phosphore rouge : 6,49 parties en poids ; résine Phénorez : 4,33 parties en poids) + 0,191 partie en poids d'oxyde de cadmium ;

exemple 1 : 63,57 parties en poids de nylon 6,6 + 25 parties en poids de fibres de verre + 0,237 partie en poids de cire-ester + 10,82 parties en poids de mélange-maître phosphore + 0,373 partie en poids de chlorure de cérium III ;

exemple 2 : 62,74 parties en poids de nylon 6,6 + 25 parties en poids de fibres de verre + 10,82 parties en poids de mélange-maître phosphore + 1,440 partie en poids de stéarate de cérium III ;

exemple 3 : 62,74 parties en poids de nylon 6,6 + 25 parties en poids de fibres de verre + 10,82 parties en poids de mélange-maître phosphore + 1,440 partie en poids de stéarate de lanthane III.

Dans cet essai et ces exemples le nylon 6,6, les fibres de verre, la cire-ester et le mélange-maître phosphore sont identiques aux constituants mis en œuvre dans les essais A à G.

2. Mode opératoire général et contrôles effectués

La préparation des compositions est opérée de la manière indiquée ci-avant au paragraphe 3 de la description des essais A à G. A noter que les conditions de marche de l'extrusion sont ici les suivantes :

| | |
|---|---|
| — température | 270 °C-335 °C |
| — vide | $944 \cdot 10^2$ Pa |
| — vitesse de la vis | 60 t/min |

Sur la poudre à mouler obtenue, on détermine la teneur en eau, l'indice de viscosité du nylon 6,6 et la viscosité apparente à 290 °C, sous un gradient de vitesse $\gamma = 240\ s^{-1}$, au bout d'un temps de séjour dans le rhéomètre de 5 min.

Sur des éprouvettes moulées (dans les conditions indiquées ci-avant au paragraphe 3 in fine de la description des essais A à G), on détermine :

— la résilience consistant dans la résistance au choc Charpy : elle est mesurée à 23 °C sur des éprouvettes lisses de type barreau de 60 × 10 × 4 mm, conditionnées de manière connue en soi à EHO ou à EH 50, selon la norme NF T 51 035 ; les résultats sont exprimés en $kJ/m^2$ ;

— la combustibilité selon le test des « Underwriters Laboratories » UL94 vertical, tel que décrit dans le document 9750-1 du Bureau des Normalisations des Matières Plastiques, pour mesurer le degré d'ignifugation ; dimensions des éprouvettes : 127 × 12,7 × 1,6 mm et 127 × 12,7 × 0,8 mm ;

— l'indice de résistance au cheminement d'arc (en abréviation IRC) selon la norme NF C 26 220 ; les mesures sont effectuées sur des éprouvettes de dimensions 50 × 50 × 3 mm ;

— l'indice de viscosité du nylon 6,6.

Par ailleurs, on effectue des prélèvements d'air au moyen d'un tube Draeger CH 31 101 pour rechercher la présence éventuelle d'hydrogène phosphoré :

— en cours d'extrusion : à la sortie de la pompe à vide,

— en cours d'injection : au-dessus de la buse d'injection de la presse DK 60.

3. Résultats des exemples 1 à 3 et de l'essai H

Les résultats obtenus sont rassemblés dans le tableau 2 donné ci-après.

(Voir Tableau 2 page 11)

Tableau 2

| Exemple Essai | Extrusion: Pression matière bout de vis MPa | Extrusion: Débit matière kg/h | Extrusion: Dégagement $PH_3$ ppm | Poudre à mouler: Taux phosphore calculé % | Poudre à mouler: Teneur en eau % | Poudre à mouler: Indice de viscosité ml/g | Poudre à mouler: Viscosité apparente Pa.s | Choc Charpy lisse: EH 0 kJ/m² | Choc Charpy lisse: EH 50 kJ/m² | Classement UL 94 épaisseur 1,6 mm | IRC: Voltage V | IRC: Erosion mm | Indice de viscosité sur éprouvettes moulées ml/g | Dégagement $PH_3$ à l'injection ppm |
|---|---|---|---|---|---|---|---|---|---|---|---|---|---|---|
| H | 5 | 30 | < 0,1 | 6,49 | 0,06 | 141 | 250 | 23 | 26 | V-O | 375 | 0,4-0,5 | 149 | < 0,1 |
| 1 | 5 | 31 | < 0,1 | 6,49 | 0,06 | 142 | 300 | 31 | 29 | V-O | 350 | 0,4 | 140 | < 0,1 |
| 2 | 5 | 28 | < 0,1 | 6,49 | 0,07 | 135 | 200 | 29 | 29 | V-O | 400 | 0,3 | 120 | < 0,1 |
| 3 | 5 | 30 | < 0,1 | 6,49 | 0,07 | 132 | 190 | 26 | 28 | V-O | 450 | 0,5 | 120 | < 0,1 |

Il apparaît au vu du tableau 2 que les composés à base de lanthanide, chlorure de cérium III, stéarates de cérium III et de lanthane III, présentent les mêmes avantages que l'oxyde de cadmium sur le plan de l'inhibition du dégagement de phosphine et sur celui du contrôle et de la limitation de l'évolution des caractéristiques moléculaires de nylon 6,6 ignifugé à l'aide de phosphore rouge. La poudre à mouler contenant le chlorure de cérium III apparaît comme particulièrement stable au moulage. Il apparaît encore, en matière de résilience et de résistance au cheminement d'arc, que les composés à base de lanthanide sont capables de procurer des résultats sensiblement supérieurs.

Exemples 4 à 13 et essais comparatifs I et J

1. Contenu de ces exemples et essais

Cette partie expérimentale va permettre de situer le comportement de compositions à base de polyamide, ne comportant pas de fibres de verre, ignifugées au moyen de phosphore rouge enrobé, dans lesquelles on met en œuvre :

aucun adjuvant métallique (essai I) ;
de l'oxyde de cadmium (essai J) ;
de l'oxyde de cérium IV ($CeO_2$), utilisé en différentes proportions (exemples 4, 5 et 6) ;
de l'oxyde de lanthane III ($La_2O_3$), utilisé en différentes proportions (exemples 7 et 8) ;
du stéarate de cérium III, utilisé en différentes proportions (exemples 9, 10 et 11) ;
du stéarate de lanthane III, utilisé en différentes proportions (exemples 12 et 13).

Plus précisément, on a préparé les compositions obtenues à partir des constituants rassemblés dans le tableau 3 suivant :

Tableau 3

| Exemple/ Essai | Compositions : parties en poids des constituants | | | | |
|---|---|---|---|---|---|
| | Nylon 6,6 | Mélange-maître phosphore | Adjuvant métallique | | |
| | | | Nature | Partie en poids | Atome-gramme métal/100 g nylon |
| I | 89 | 11 | — | — | — |
| J | 89 | 11 | CdO | 0,300 | 2,6.10$^{-3}$ |
| 4 | 89 | 11 | $CeO_2$ | 0,402 | 2,6.10$^{-3}$ |
| 5 | 89 | 11 | $CeO_2$ | 0,613 | 4,0.10$^{-3}$ |
| 6 | 89 | 11 | $CeO_2$ | 1,226 | 8,0.10$^{-3}$ |
| 7 | 89 | 11 | $La_2O_3$ | 0,381 | 2,6.10$^{-3}$ |
| 8 | 89 | 11 | $La_2O_3$ | 0,613 | 4,2.10$^{-3}$ |
| 9 | 89 | 11 | Ce stéarate | 0,386 | 0,43.10$^{-3}$ |
| 10 | 89 | 11 | Ce stéarate | 0,588 | 0,67.10$^{-3}$ |
| 11 | 89 | 11 | Ce stéarate | 1,159 | 1,3.10$^{-3}$ |
| 12 | 89 | 11 | La stéarate | 0,386 | 0,43.10$^{-3}$ |
| 13 | 89 | 11 | La stéarate | 1,159 | 1,3.10$^{-3}$ |

Dans ces essais et exemples, le nylon 6,6 et le mélange-maître phosphore sont identiques aux constituants mis en œuvre dans les essais A à G.

2. Mode opératoire général et contrôles effectués

La préparation des compositions est opérée de la manière indiquée ci-avant au paragraphe 3 de la description des essais A à G. A noter que les conditions de marche de l'extrusion sont ici les suivantes :

— température 270 °C-330 °C
— vide 931 · 10$^2$ Pa
— vitesse de la vis 70 t/min

S'agissant des contrôles effectués, on détermine certaines des différentes caractéristiques physico-mécaniques mentionnées ci-avant au paragraphe 2 de la description des exemples 1 à 3. A noter que pour faire les éprouvettes moulées, on reprend les conditions indiquées au paragraphe 3 in fine de la description des essais A à G sauf en ce qui concerne la pression d'injection qui est abaissée à 70 MPa et la durée du cycle d'injection qui est portée à 22 s.

3. Résultats des exemples 4 à 13 et des essais I et J

Les résultats obtenus sont rassemblés dans le tableau 4 donné ci-après.

Tableau 4

| Exemple Essai | Extrusion | | Poudre à mouler | | | | Classement UL 94 épaisseur 1,6 mm | Indice de viscosité sur éprouvettes moulées ml/g | Dégagement $PH_3$ à l'injection ppm |
|---|---|---|---|---|---|---|---|---|---|
| | Débit matière kg/h | Dégagement $PH_3$ ppm | Taux phosphore calculé % en poids | Teneur en eau % en poids | Indice de viscosité ml/g | Viscosité apparente en Pa.s | | | |
| I | 20 | < 0,3 | 6,60 | 0,19 | 151 | 500 | V-O | 162 | < 0,3 |
| J | 26 | 0 | 6,58 | 0,09 | 141 | 150 | V-O | 148 | < 0,1 |
| 4 | 38 | 0 | 6,57 | 0,09 | 145 | 450 | V-O | 166 | < 0,1 |
| 5 | 39 | 0 | 6,55 | 0,09 | 141 | 300 | V-O | 155 | < 0,1 |
| 6 | 37 | 0 | 6,52 | 0,10 | 142 | 230 | V-O | 154 | < 0,1 |
| 7 | 38 | 0 | 6,57 | 0,08 | 145 | 420 | V-O | 157 | < 0,1 |
| 8 | 39 | 0 | 6,55 | 0,08 | 139 | 300 | V-O | 154 | < 0,1 |
| 9 | 36 | 0 | 6,57 | 0,06 | 134 | 110 | V-O | 134 | < 0,1 |
| 10 | 40 | 0 | 6,56 | 0,05 | 137 | 96 | V-O | 135 | 0 |
| 11 | 37 | 0 | 6,52 | 0,08 | 132 | 56 | V-O | 123 | < 0,1 |
| 12 | 36 | < 0,1 | 6,57 | 0,08 | 137 | 110 | V-O | 137 | 0 |
| 13 | 38 | 0 | 6,52 | 0,08 | 135 | 50 | V-O | 125 | 0 |

Exemple 14 et essai comparatif K

Cette partie expérimentale va permettre de situer le comportement notamment sur le plan de la tenue au vieillissement de compositions à base de polyamide et de fibres de verre, ignifugées au moyen de phosphore rouge enrobé, dans lesquelles ont met en œuvre :

de l'oxyde de cadmium (essai K) ;

du stéarate de cérium III (exemple 14).

Plus précisément, on prépare les compositions obtenues à partir des constituants suivants :

essai K : 64 parties en poids de nylon 6,6 + 25 parties en poids de fibres de verre + 0,16 partie de cire-ester + 11 parties en poids de mélange-maître phosphore (phosphore rouge : 6,6 parties en poids) + 0,300 partie en poids d'oxyde de cadmium ($3{,}6 \cdot 10^{-3}$ atome-grammes de cadmium/100 g de nylon 6,6) ;

exemple 14 : 64 parties en poids de nylon 6,6 + 25 parties en poids de fibres de verre + 11 parties en poids de mélange-maître phosphore + 0,423 partie en poids de stéarate de cérium III ($0{,}67 \cdot 10^{-3}$ atome-grammes de cérium/100 g de nylon 6,6).

Le nylon 6,6, les fibres de verre, la cire-ester et le mélange-maître phosphore sont identiques aux constituants mis en œuvre dans les essais A et G. Les conditions de réalisation de ces essai et exemple sont celles décrites ci-avant au paragraphe 3 de la description des essais A à G ; à noter que pour la marche de l'extrusion, la vitesse de la vis est fixée ici à 60 t/min.

S'agissant des contrôles effectués, on détermine certaines des différentes caractéristiques physico-mécaniques mentionnées ci-avant au paragraphe 2 de la description des exemples 1 à 3. La résistance au choc Charpy est déterminée sur des éprouvettes d'une part conditionnées à EHO et d'autre part placées pendant 7 jours sous air à 125 °C. Les résultats obtenus sont rassemblés dans le tableau 5 donné ci-après. On pourra noter qu'une composition conforme à la présente invention présente une meilleure tenue au vieillissement thermique par rapport à ce qui se passe avec de l'oxyde de cadmium : avec le stéarate de cérium on note une faible chute de 3 % du choc lisse au bout de 7 jours à 125 °C, tandis qu'avec l'oxyde de cadmium cette chute est de 14 %.

(Voir Tableau 5 page 15)

Tableau 5

| Exemple Essai | Extrusion | | Poudre à mouler | | | Choc charpy lisse | | Classement UL.94 épaisseur 1,6 mm | Indice de viscosité sur éprouvettes moulées ml/g | Dégagement $PH_3$ à l'injection ppm |
|---|---|---|---|---|---|---|---|---|---|---|
| | Débit matière kg/h | Dégagement $PH_3$ ppm | Taux phosphore calculé % en poids | Teneur en eau % en poids | Indice de viscosité ml/g | EHO kJ/m² | 7 jours à 125 °C kJ/m² | | | |
| K | 30 | < 0,1 | 6,57 | 0,10 | 145 | 20,1 | 17,2 | V-O | 140 | < 0,1 |
| 14 | 28 | < 0,1 | 6,57 | 0,13 | 139 | 25,9 | 25,1 | V-O | 136 | < 0,1 |

| Exemple Essai | Viscosité apparente en Pa.s |
|---|---|
| K | 270 |
| 14 | 230 |

**Revendications**

1. Compositions à base de polyamide ignifugé au moyen de phosphore rouge, caractérisées en ce qu'elles comprennent une quantité efficace d'au moins un composé à base de lanthanide (on appelle lanthanide, les métaux de la classification périodique des éléments ayant les numéros atomiques allant de 57 à 71 ainsi que l'yttrium).

2. Compositions selon la revendication 1, caractérisées en ce que le composé à base de lanthanide consiste dans :

— un dérivé organique ou inorganique de l'un quelconque des lanthanides : cérium, lanthane, praséodyme, néodyme, prométhium, samarium, europium, gadolinium, terbium, dysprosium, holmium, erbium, ytterbium, thulium, lutétium et yttrium ;

— ou un mélange de dérivés organiques et/ou inorganiques de plusieurs de ces lanthanides.

3. Compositions selon la revendication 2, caractérisées en ce que lorsque l'on considère un dérivé d'un seul lanthanide, ce dernier est le cérium, le lanthane, le praséodyme ou le néodyme.

4. Compositions selon la revendication 2, caractérisées en ce que lorsque l'on considère un mélange de dérivés de plusieurs lanthanides, ce dernier consiste dans les espèces suivantes :

— mélange de dérivés du cérium et d'un ou plusieurs des autres lanthanides ;

— mélange de dérivés de lanthane et d'un ou plusieurs autres lanthanides choisis parmi le praséodyme, le néodyme, le prométhium, le samarium, l'europium, le gadolinium, le terbium, le dysprosium, l'holmium, l'erbium, l'ytterbium, le thulium, le lutétium et l'yttrium ;

— mélange de dérivés du praséodyme et d'un ou plusieurs autres lanthanides choisis parmi le néodyme, le prométhium, le samarium, l'europium, le gadolinium, le terbium, le dysprosium, l'holmium, l'erbium, l'ytterbium, le thulium, le lutétium et l'yttrium ;

— ou mélange de dérivés du néodyme et d'un ou plusieurs autres lanthanides choisis parmi le prométhium, le samarium, l'europium, le gadolinium, le terbium, le dysprosium, l'holmium, l'erbium, l'ytterbium, le thulium, le lutétium et l'yttrium.

5. Compositions selon la revendication 4, caractérisées en ce que le cérium et/ou le lanthane et/ou le praséodyme et/ou le néodyme représentent au moins 40 % en moles du total des lanthanides.

6. Compositions selon l'une quelconque des revendications 2 à 5, caractérisées en ce que les dérivés organiques de lanthanide sont choisis parmi :

— les sels de lanthanide :

des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyles, les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyles, groupements alkyles ayant 1 à 6 atomes de carbone ou alkoxy ayant 1 à 6 atomes de carbone ;

des acides benzoïque, naphtoïque-1, naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyles, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyles ayant 2 à 24 atomes de carbone ou alkénoxycarbonyles ayant 4 à 24 atomes de carbone ;

des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment ;

des acides carboxyliques hétérocycliques notamment de ceux dérivés de la pyridine, du furanne, du thiophène, du pyrrole et du pyranne, pouvant comporter un ou plusieurs substituants tels que les atomes d'halogènes, les groupements hydroxyles, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyles ayant 2 à 24 atomes de carbone ou alkénoxycarbonyles ayant 4 à 24 atomes de carbone ;

— les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle ;

— les mercaptides de lanthanide notamment ceux qui dérivent des acides thioglycolique ou thiomalique et de leurs esters d'alkyle (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone ;

— les chélates de lanthanide de composés β-dicarbonylés notamment ceux qui dérivent des composés de formule générale (I) :

$$R_1—CO—CHR_2—CO—R_3 \quad (I)$$

dans laquelle :

— $R_1$ et $R_3$, identiques ou différents, représentent :

un groupement alkyle, linéaire ou ramifié, ayant 1 à 36 atomes de carbone, éventuellement substitué par un ou des atomes d'halogène,

un groupement alkényle, linéaire ou ramifié, ayant 3 à 36 atomes de carbone, éventuellement substitué par un ou des atomes d'halogènes,

un radical aryle ou un radical aryle portant sur le cycle aromatique un ou plusieurs substituants tels que :

les radicaux alkyles ayant 1 à 6 atomes de carbone, éventuellement substitués par un ou des atomes d'halogènes,

les radicaux alkényles ayant 2 à 6 atomes de carbone, éventuellement substitués par un ou des atomes d'halogènes,

le groupement nitro,

le groupement —CHO,

le groupement —COOH,

les groupements alkoxy ayant 1 à 6 atomes de carbone,

les groupements $—COOR_4$, $R_4$ étant un radical alkyle ayant 1 à 12 atomes de carbone ou alkényle ayant 2 à 12 atomes de carbone,

le groupement OH,

les atomes d'halogènes,

un radical aralkyle dont la partie aliphatique comporte de 1 à 12 atomes de carbone et dont la partie cyclique peut comporter un ou plusieurs des substituants indiqués précédemment,

un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

un enchaînement de plusieurs des radicaux indiqués précédemment,

les différents radicaux aliphatiques précédemment définis pouvant comporter un ou plusieurs atomes d'oxygène —O— ou de soufre —S— ou groupements carbonyles —CO— ou carboxylates —COO— ;

— $R_2$ représente un atome d'hydrogène.

7. Compositions selon la revendication 6, caractérisées en ce que les dérivés organiques de lanthanide sont choisis parmi :

— les sels de lanthanide :

des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyles, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyles, groupements alkyles ou alkoxy ayant 1 à 6 atomes de carbone ;

des acides mercaptomonocarboxyliques ayant de 2 à 6 atomes de carbone ou mercaptodicarboxyliques ayant de 3 à 6 atomes de carbone ;

des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyles ayant 2 à 12 atomes de carbone ;

des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyles, groupements mercapto, groupements alkoxy ayant 1 à 6 atomes de carbone ;

— les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

8. Compositions selon l'une quelconque des revendications 2 à 5, caractérisées en ce que les dérivés inorganiques de lanthanide sont choisis parmi les oxydes, les hydroxydes, les sels d'hydracides minéraux et les sels d'oxyacides minéraux de lanthanide.

9. Compositions selon la revendication 8, caractérisées en ce que l'on utilise comme sels de lanthanide d'hydracides minéraux : les chlorure, bromure, iodure, sulfure, séléniure et tellurure ; comme sels de lanthanide d'oxyacides minéraux : les sulfite, sulfate, sulfonate, nitrite, nitrate, phosphite, phosphate, pyrophosphate, carbonate, perchlorate, antimoniate, arséniate, sélénite, sélénate, vanadate et tungstate.

10. Compositions selon l'une quelconque des revendications 1 à 9, caractérisées en ce qu'elles

comprennent une quantité efficace d'au moins un composé à base de lanthanide choisi parmi le stéarate de lanthane III, l'oxyde de lanthane III, le chlorure de lanthane III, le stéarate de cérium III, l'oxyde de cérium IV, le chlorure de cérium III.

11. Composition selon l'une quelconque des revendications 1 à 10, caractérisées en ce que la quantité de composé(s) à base de lanthanide mise en œuvre est déterminée de manière à apporter de $0,1 \cdot 10^{-3}$ à $100 \cdot 10^{-3}$ et, de préférence, de $0,2 \cdot 10^{-3}$ à $30 \cdot 10^{-3}$ atome-grammes de métal appartenant au groupe des lanthanides pour 100 g de polyamide.

12. Compositions selon l'une quelconque des revendications 1 à 11, caractérisées en ce que le polyamide est choisi dans le groupe constitué par : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acides ω-aminoalcanoïques comportant une chaîne hydrocarbonée ayant de 4 à 12 atomes, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

13. Compositions selon l'une quelconque des revendications 1 à 12, caractérisées en ce qu'elles renferment du phosphore rouge en proportions comprises entre 0,02 et 25 % en poids et, de préférence, entre 0,2 et 15 % en poids par rapport au poids total des compositions.

14. Compositions selon l'une quelconque des revendications 1 à 13, caractérisées en ce que le phosphore rouge se trouve sous forme de particules enrobées au moyen d'une pellicule de polymère.

15. Compositions selon la revendication 14, caractérisées en ce que le polymère d'enrobage est choisi dans le groupe constitué par : les résines époxy, des polymères ayant des liaisons insaturées maléiques, fumariques ou allyliques, des polyesters saturés, des polycondensats phénol-formaldéhyde thermoplastiques, des polycondensats phénol-isobutyraldéhyde.

16. Compositions selon l'une quelconque des revendications 1 à 15, caractérisées en ce qu'elles comprennent en outre, de 15 à 60 %, par rapport au poids total des compositions, de fibres de verre.

17. Objets conformés préparés à partir des compositions selon l'une quelconque des revendications 1 à 16.

**Claims**

1. Compositions based on polyamide rendered fireproof by means of red phosphorus, characterized in that they comprise an effective quantity of at least one lanthanide-based compound (the metals in the periodic classification of the elements which have atomic numbers ranging from 57 to 71, and yttrium, are called lanthanide).

2. Compositions according to Claim 1, characterized in that the lanthanide-based compound consists of :

— an organic or inorganic derivative of any one of the lanthanides : cerium, lanthanum, praseodymium, neodymium, promethium, samarium, europium, gadolinium, terbium, dysprosium, holmium, erbium, ytterbium, thulium, lutetium and yttrium ; or

— a mixture of organic and/or inorganic derivatives of several of these lanthanides.

3. Compositions according to Claim 2, characterized in that, if the use of a derivative of a single lanthanide is considered, the latter is cerium, lanthanum, praseodymium or neodymium.

4. Composition according to Claim 2, characterized in that, if the use of a mixture of derivatives of several lanthanides is considered, this mixture consists of the following species :

— a mixture of derivatives of cerium and one or more of the other lanthanides ;

— a mixture of derivatives of lanthanum and one or more other lanthanides chosen from praseodymium, neodymium, promethium, samarium, europium, gadolinium, terbium, dysprosium, holmium, erbium, ytterbium, thulium, lutetium and yttrium ;

— a mixture of derivatives of praseodymium and one or more other lanthanides chosen from neodymium, promethium, samarium, europium, gadolinium, terbium, dysprosium, holmium, erbium, ytterbium, thulium, lutetium and yttrium ; or

— a mixture of derivatives of neodymium and one or more other lanthanides chosen from promethium, samarium, europium, gadolinium, terbium, dysprosium, holmium, erbium, ytterbium, thulium, lutetium and yttrium.

5. Compositions according to Claim 4, characterized in that cerium and/or lanthanum and/or praseodymium and/or neodymium generally represent at least 40 mol % of the total lanthanides.

6. Compositions according to any one of Claims 2 to 5, characterized in that the organic lanthanide derivatives are chosen from :

— lanthanide salts of :

aliphatic monocarboxylic acids containing from 2 to 30 carbon atoms or aliphatic dicarboxylic acids containing from 3 to 30 carbon atoms, which are saturated or contain one or more ethylenic double bonds and which may contain 1 or more substituents such as halogen atoms, hydroxyl groups, alkoxy

groups containing from 1 to 12 carbon atoms, mercapto groups or phenyl, phenoxy, naphthyl or cyclohexyl groups in which the rings are optionally substituted by one or more halogen atoms, hydroxyl groups, alkyl groups containing 1 to 6 carbon atoms or alkoxy groups containing 1 to 6 carbon atoms ;

benzoic, 1-naphthoic, 2-naphthoic, cyclopentanecarboxylic, cyclohexanecarboxylic, cyclopentenecarboxylic or cyclohexenecarboxylic acid, it being possible for the cyclic parts of these acids to contain one or more substituents such as halogen atoms, hydroxyl groups, alkyl groups containing 1 to 12 carbon atoms, alkenyl groups containing 2 to 12 carbon atoms, alkoxy groups containing 1 to 12 carbon atoms, phenyl, benzyl, phenoxy or cyclohexyl groups, alkoxycarbonyl groups containing 2 to 24 carbon atoms or alkenoxycarbonyl groups containing 4 to 24 carbon atoms ;

monoalkyl esters (the alkyl group containing 1 to 24 carbon atoms) or monoalkenyl esters (the alkenyl group containing 3 to 24 carbon atoms) of the aliphatic dicarboxylic acids indicated above ; or

heterocyclic carboxylic acids, especially those derived from pyridine, furan, thiophene, pyrrole and pyran, which may contain one or more substituents such as halogen atoms, hydroxyl groups, alkyl groups containing 1 to 12 carbon atoms, alkoxy groups containing 1 to 12 carbon atoms, alkenyl groups containing 2 to 12 carbon atoms, alkoxycarbonyl groups containing 2 to 24 carbon atoms or alkenoxycarbonyl groups containing 4 to 24 carbon atoms ;

— lanthanide phenates derived from phenol, 1-naphthol or 2-naphthol, in which the cyclic parts contain one or more substituents such as halogen atoms, alkyl or alkoxy groups containing 1 to 24 carbon atoms, alkenyl groups containing 2 to 24 carbon atoms or phenyl, benzyl, phenoxy or cyclohexyl groups ;

— lanthanide mercaptides, especially those derived from thioglycolic or thiomalic acid and from their alkyl esters (the alkyl radical containing 1 to 12 carbon atoms), alkenyl esters (the alkenyl radical containing 2 to 12 carbon atoms), phenyl, benzyl or cyclohexyl esters, alkanediol esters (the alkanediol containing from 2 to 12 carbon atoms) or dihydroxybenzene or dihydroxycyclohexane esters, it being possible for the cyclic parts of the said esters to be substituted by one or more alkyl or alkoxy radicals containing from 1 to 6 carbon atoms ; and

— lanthanide chelates of β-dicarbonyl compounds, especially those derived from the compounds of the general formula (I) :

$$R_1—CO—CHR_2—CO—R_3 \qquad (I)$$

in which :

$R_1$ and $R_3$, which are identical or different, represent :

a linear or branched alkyl group containing 1 to 36 carbon atoms, which is optionally substituted by one or more halogen atoms,

a linear or branched alkenyl group containing 3 to 36 carbon atoms, which is optionally substituted by one or more halogen atoms,

an aryl radical or an aryl radical whose aromatic ring carries one or more substituents such as :

alkyl radicals containing 1 to 6 carbon atoms, which are optionally substituted by one or more halogen atoms,

alkenyl radicals containing 2 to 6 carbon atoms, which are optionally substituted by one or more halogen atoms,

the nitro group,

the —CHO group,

the —COOH group,

alkoxy groups containing 1 to 6 carbon atoms —$COOR_4$ groups, $R_4$ being an alkyl radical containing 1 to 12 carbon atoms or an alkenyl radical containing 2 to 12 carbon atoms,

the OH group or

halogen atoms,

an aralkyl radical in which the aliphatic part contains from 1 to 12 carbon atoms and in which the cyclic part may contain one or more of the substituents indicated above,

a cycloaliphatic radical containing from 5 to 12 carbon atoms, in which the cyclic part may contain one or more carbon-carbon double bonds and carry one or more of the substituents indicated above, or

a sequence of several of the radicals indicated above,

it being possible for the various aliphatic radicals defined above to contain one or more oxygen atoms —O—, sulphur atoms —S—, carbonyl groups —CO— or carboxylate groups —COO— ; and

— $R_2$ represents a hydrogen atom.

7. Compositions according to Claim 6, characterized in that the organic lanthanide derivatives are chosen from :

— lanthanide salts of :

aliphatic monocarboxylic acids containing from 6 to 24 carbon atoms, which are saturated or possess an ethylenic double bond and which may contain one or more substituents such as chlorine atoms, hydroxyl groups, alkoxy groups containing from 1 to 6 carbon atoms or phenyl, phenoxy or cyclohexyl groups, these cyclic groups being optionally substituted by one or more chlorine atoms, hydroxyl groups or alkyl or alkoxy groups containing 1 to 6 carbon atoms ;

mercaptomonocarboxylic acids containing from 2 to 6 carbon atoms or mercaptodicarboxylic acids containing from 3 to 6 carbon atoms ;

benzoic or cyclohexanecarboxylic acids, in which the cyclic part may contain one or more substituents such as chlorine atoms, hydroxyl groups, alkyl or alkoxy groups containing 1 to 6 carbon atoms or alkoxycarbonyl groups containing 2 to 12 carbon atoms ; or

monoalkyl esters (the alkyl group containing 1 to 12 carbon atoms) of aliphatic dicarboxylic acids containing 4 to 24 carbon atoms, which are saturated or possess an ethylenic double bond and which may contain one or more substituents such as chlorine atoms, hydroxyl groups, mercapto groups or alkoxy groups containing 1 to 6 carbon atoms ; and

— lanthanide phenates derived from phenol, in which the ring may contain one or more substituents such as chlorine atoms, alkyl or alkoxy groups containing 1 to 12 carbon atoms or phenyl, benzyl, phenoxy or cyclohexyl groups.

8. Compositions according to any one of Claims 2 to 5, characterized in that the inorganic lanthanide derivatives are chosen from lanthanide oxides, hydroxides, salts of mineral hydracids and salts of mineral oxyacids.

9. Compositions according to Claim 8, characterized in that the lanthanide salts of mineral hydracids used are the chlorides, bromides, iodides, sulphides, selenides and tellurides, and the lanthanide salts of mineral oxyacids used are the sulphites, sulphates, sulphonates, nitrites, nitrates, phosphites, phosphates, pyrophosphates, carbonates, perchlorates, antimonates, arsenates, selenites, selenates, vanadates and tungstates.

10. Compositions according to any one of Claims 1 to 9, characterized in that they comprise an effective quantity of at least one lanthanide-based compound chosen from lanthanum (III) stearate, lanthanum (III) oxide, lanthanum (III) chloride, cerium (III) stearate, cerium (IV) oxide and cerium (III) chloride.

11. Compositions according to any one of Claims 1 to 10, characterized in that the quantity of lanthanide-based compound(s) used is determined so as to provide from $0.1 \times 10^{-3}$ to $100 \times 10^{-3}$ and preferably from $0.2 \times 10^{-3}$ to $30 \times 10^{-3}$ gram-atoms of metal belonging to the lanthanide group per 100 g to polyamide.

12. Compositions according to any one of Claims 1 to 11, characterized in that the polyamide is chosen from the group consisting of : polyamides obtained by the polycondensation of saturated aliphatic dicarboxylic acids containing from 6 to 12 carbon atoms with saturated aliphatic diprimary diamines containing from 6 to 12 carbon atoms ; polyaminoacids obtained either by the direct homopolycondensation of ω-aminoalkanoic acids containing a hydrocarbon chain containing from 4 to 12 carbon atoms, or by the hydrolytic opening and polymerization of the lactams derived from these acids ; copolyamides obtained from the starting monomers of the abovementioned polyamides, it also being possible for part of the acid component of these copolyamides to consist of terephthalic acid and/or isophthalic acid ; and mixtures of polyamides of these types.

13. Compositions according to any one of Claims 1 to 12, characterized in that they contain red phosphorus in proportions of between 0.02 and 25 % by weight and preferably of between 0.2 and 15 % by weight, relative to the total weight of the compositions.

14. Compositions according to any one of Claims 1 to 13, characterized in that the red phosphorus is in the form of particles coated with a polymer film.

15. Compositions according to Claim 14, characterized in that the coating polymer is chosen from the group consisting of : epoxy resins, polymers containing unsaturated bonds of the maleic, fumaric or allylic type, saturated polyesters, thermoplastic phenol-formaldehyde polycondensates and phenol-isobutyraldehyde polycondensates.

16. Compositions according to any one of Claims 1 to 15, characterized in that they also comprise from 15 to 60 % of glass fibres, relative to the total weight of the compositions.

17. Shaped articles prepared from compositions according to any one of Claims 1 to 16.

**Patentansprüche**

1. Zusammensetzungen auf Basis von mittels rotem Phosphor feuersicher gemachtem Polyamid, dadurch gekennzeichnet, daß sie eine wirksame Menge mindestens einer Verbindung auf Lanthanid-Basis (man nennt Lanthanid die Metalle der periodischen Klassifizierung der Elemente mit den Atomnummern von 57 bis 71 sowie das Yttrium) umfassen.

2. Zusammensetzungen gemäß Anspruch 1, dadurch gekennzeichnet, daß die Verbindung auf Lanthanid-Basis besteht in :

— einem organischen oder anorganischem Derivat irgendeines der Lanthanide : Cer, Lanthan, Praseodym, Neodym, Promethium, Samarium, Europium, Gadolinium, Terbium, Dysprosium, Holmium, Erbium, Ytterbium, Thulium, Lutetium und Yttrium ;

— oder einem Gemisch organischer und/oder anorganischer Derivate mehrerer dieser Lanthanide.

3. Zusammensetzungen gemäß Anspruch 2, dadurch gekennzeichnet, daß, wenn man ein Derivat eines einzigen Lanthanids in Betracht zieht, dieses letztere das Cer, Lanthan, Praseodym oder Neodym ist.

4. Zusammensetzungen gemäß Anspruch 2, dadurch gekennzeichnet, daß, falls man ein Gemisch

von Derivaten mehrerer Lanthanide in Betracht zieht, das letztere aus den folgenden Arten besteht :

— Gemisch von Derivaten des Cers und einem oder mehreren der anderen Lanthanide ;

— Gemisch von Lanthan-Derivaten und einem oder mehreren anderen Lanthaniden, ausgewählt unter Praseodym, Neodym, Promethium, Samarium, Europium, Gadolinium, Terbium, Dysprosium, Holmium, Erbium, Ytterbium, Thulium, Lutetium und Yttrium ;

— Gemisch von Derivaten des Praseodyms und einem oder mehreren anderen Lanthaniden, ausgewählt unter Neodym, Promethium, Samarium, Europium, Gadolinium, Terbium, Dysprosium, Holmium, Erbium, Ytterbium, Thulium, Lutetium und Yttrium ;

— oder Gemisch von Derivaten des Neodyms und einem oder mehreren anderen Lanthaniden, ausgewählt unter Promethium, Samarium, Europium, Gadolinium, Terbium, Dysprosium, Holmium, Erbium, Ytterbium, Thulium, Lutetium und Yttrium.

5. Zusammensetzungen gemäß Anspruch 4, dadurch gekennzeichnet, daß das Cer und/oder das Lanthan und/oder das Praseodym und/oder das Neodym mindestens 40 Mol-% der Gesamtheit der Lanthanide darstellen.

6. Zusammensetzungen gemäß einem der Ansprüche 2 bis 5, dadurch gekennzeichnet, daß die organischen Lanthanid-Derivate ausgewählt sind unter :

— den Lanthanidsalzen :

der aliphatischen Monocarbonsäuren mit 2 bis 30 Kohlenstoffatomen oder Dicarbonsäuren mit 3 bis 30 Kohlenstoffatomen, die gesättigt sind oder eine oder mehrere ethylenische Doppelbindungen tragen und einen oder mehrere Substituenten tragen können, wie Halogenatome, Hydroxylgruppen, Alkoxygruppen mit 1 bis 12 Kohlenstoffatomen, Mercaptogruppen, Phenyl-, Phenoxy-, Naphthyl- oder Cyclohexylgruppen, deren Ringe gegebenenfalls substituiert sind durch ein oder mehrere Halogenatome, Hydroxylgruppen, Alkylgruppen mit 1 bis 6 Kohlenstoffatomen oder Alkoxygruppen mit 1 bis 6 Kohlenstoffatomen ;

der Benzoesäure, 1-Naphthoe-, 2-Naphthoesäure, Cyclopentancarbon-, Cyclohexancarbon-, Cyclopentencarbon- oder Cyclohexencarbonsäure, wobei die cyclischen Teile dieser Säuren einen oder mehrere Substituenten tragen können, wie Halogenatome, Hydroxylgruppen, Alkylgruppen mit 1 bis 12 Kohlenstoffatomen, Alkenylgruppen mit 2 bis 12 Kohlenstoffatomen, Alkoxy mit 1 bis 12 Kohlenstoffatomen, Phenyl-, Benzyl-, Phenoxy- oder Cyclohexylgruppen, Alkoxycarbonylgruppen mit 2 bis 24 Kohlenstoffatomen oder Alkenoxycarbonylgruppen mit 4 bis 24 Kohlenstoffatomen ;

der Alkylmonoester (die Alkylgruppe hat 1 bis 24 Kohlenstoffatome) oder Alkenylmonoester (die Alkenylgruppe hat 3 bis 24 Kohlenstoffatome) der vorstehend angegebenen aliphatischen Dicarbonsäuren ;

der heterocyclischen Carbonsäuren, insbesondere solcher, die abgeleitet sind von Pyridin, Furan, Thiophen, Pyrrol und Pyran, die einen oder mehrere Substituenten tragen können, wie Halogenatome, Hydroxylgruppen, Alkylgruppen mit 1 bis 12 Kohlenstoffatomen, Alkoxygruppen mit 1 bis 12 Kohlenstoffatomen, Alkenylgruppen mit 2 bis 12 Kohlenstoffatomen, Alkoxycarbonylgruppen mit 2 bis 24 Kohlenstoffatomen oder Alkenoxycarbonylgruppen mit 4 bis 24 Kohlenstoffatomen ;

— den Lanthanidphenolaten, stammend von Phenol, Naphthol-1 oder Naphthol-2, deren cyclische Teile einen oder mehrere Substituenten tragen können, wie Halogenatome, Alkyl- oder Alkoxygruppen mit 1 bis 24 Kohlenstoffatomen, Alkenylgruppen mit 2 bis 24 Kohlenstoffatomen, Phenyl, Benzyl, Phenoxy oder Cyclohexyl ;

— den Lanthanidmercaptiden, insbesondere solchen, die von Thioglykol- oder Thioapfelsäure stammen, und ihren Alkylestern (der Alkylrest hat 1 bis 12 Kohlenstoffatome), Alkenylestern (der Alkenylrest hat 2 bis 12 Kohlenstoffatome), Phenyl-, Benzyl-, Cyclohexyl-, Alkandiol- (mit 2 bis 12 Kohlenstoffatomen), Dihydroxybenzol-, Dihydroxycyclohexanestern, wobei die cyclischen Teile dieser Ester durch einen oder mehrere Alkyl- oder Alkoxyreste mit 1 bis 6 Kohlenstoffatomen substituiert sein können ;

— den Lanthanidchelaten von β-Dicarbonylverbindungen, insbesondere solchen, die sich ableiten von Verbindungen der allgemeinen Formel (I) :

$$R_1—CO—CHR_2—CO—R_3 \qquad (I)$$

worin

— $R_1$ und $R_3$, die identisch oder verschieden sind, bedeuten :

eine lineare oder verzweigte Alkylgruppe mit 1 bis 36 Kohlenstoffatomen, gegebenenfalls substituiert durch ein oder die Halogenatome,

eine lineare oder verzweigte Alkenylgruppe mit 3 bis 36 Kohlenstoffatomen, gegebenenfalls substituiert durch ein oder die Halogenatome,

einen Arylrest oder einen Arylrest, der am aromatischen Ring einen oder mehrere Substituenten trägt, wie :

Alkylreste mit 1 bis 6 Kohlenstoffatomen, gegebenenfalls substituiert durch ein oder die Halogenatome,

Alkenylreste mit 2 bis 6 Kohlenstoffatomen, gegebenenfalls substituiert durch ein oder die Halogenatome,

die Nitrogruppe,
die —CHO-Gruppe,
die —COOH-Gruppe,
die Alkoxygruppen mit 1 bis 6 Kohlenstoffatomen,
die —$COOR_4$-Gruppen, wobei $R_4$ ein Alkylrest mit 1 bis 12 Kohlenstoffatomen oder ein Alkenylrest mit 2 bis 12 Kohlenstoffatomen ist,
die OH-Gruppe,
die Halogenatome,

einen Aralkylrest, dessen aliphatischer Teil 1 bis 12 Kohlenstoffatome hat und dessen cyclischer Teil einen oder mehrere der vorstehend genannten Substituenten tragen kann,

einen cycloaliphatischen Rest mit 5 bis 12 Kohlenstoffatomen, dessen cyclischer Teil einen oder mehrere Kohlenstoff-Kohlenstoff-Doppelbindungen haben kann und einen oder mehrere der vorstehend angegebenen Substituenten tragen kann,

eine Verkettung von mehreren der vorstehend angegebenen Reste,

wobei die verschiedenen, vorstehend definierten aliphatischen Reste ein oder mehrere Sauerstoffatome, —O—, oder Schwefelatome, —S—, oder Carbonylgruppen, —CO—, oder Carboxylate, —COO—, tragen können ;

— $R_2$ ein Wasserstoffatom bedeutet.

7. Zusammensetzungen gemäß Anspruch 6, dadurch gekennzeichnet, daß die organischen Lanthanid-Derivate ausgewählt sind unter :

— den Lanthanidsalzen :

der aliphatischen Monocarbonsäuren mit 6 bis 24 Kohlenstoffatomen, die gesättigt sind oder eine ethylenische Doppelbindung haben und einen oder mehrere Substituenten tragen können, wie Chloratome, Hydroxylgruppen, Alkoxygruppen mit 1 bis 6 Kohlenstoffatomen, Phenyl-, Phenoxy- oder Cyclohexylgruppen, wobei diese cyclischen Gruppen gegebenenfalls durch ein oder mehrere Chloratome, Hydroxylgruppen, Alkyl- oder Alkoxygruppen mit 1 bis 6 Kohlenstoffatomen substituiert sind ;

der Mercaptomonocarbonsäuren mit 2 bis 6 Kohlenstoffatomen oder Mercaptodicarbonsäuren mit 3 bis 6 Kohlenstoffatomen ;

der Benzoe- oder Cyclohexancarbonsäuren, deren cyclischer Teil einen oder mehrere Substituenten tragen kann, wie Chloratome, Hydroxylgruppen, Alkyl- oder Alkoxygruppen mit 1 bis 6 Kohlenstoffatomen oder Alkoxycarbonylgruppen mit 2 bis 12 Kohlenstoffatomen ;

der Alkylmonoester (die Alkylgruppe hat 1 bis 12 Kohlenstoffatome) der aliphatischen Dicarbonsäuren mit 4 bis 24 Kohlenstoffatomen, die gesättigt sind oder eine ethylenische Doppelbindung besitzen und die einen oder mehrere Substituenten tragen können, wie Chloratome, Hydroxylgruppen, Mercaptogruppen, Alkoxygruppen mit 1 bis 6 Kohlenstoffatomen ;

— den Lanthanidphenolaten, die von Phenol abgeleitet sind, dessen Ring einen oder mehrere Substituenten tragen kann, wie Chloratome, Alkyl- oder Alkoxygruppen mit 1 bis 12 Kohlenstoffatomen, Phenyl-, Benzyl-, Phenoxy- oder Cyclohexylgruppen.

8. Zusammensetzungen gemäß einem der Ansprüche 2 bis 5, dadurch gekennzeichnet, daß die anorganischen Lanthanid-Derivate ausgewählt sind unter den Oxiden, Hydroxiden, den Salzen mineralischer Wasserstoffsäuren und den Salzen mineralischer Sauerstoffsäuren des Lanthanids.

9. Zusammensetzungen gemäß Anspruch 8, dadurch gekennzeichnet, daß man als Lanthanidsalze der mineralischen Wasserstoffsäuren verwendet : das Chlorid, Bromid, Jodid, Sulfid, Selenid und Tellurid ; als Lanthanidsalze mineralischer Sauerstoffsäuren : das Sulfit, Sulfat, Sulfonat, Nitrit, Nitrat, Phosphit, Phosphat, Pyrophosphat, Carbonat, Perchlorat, Antimoniat, Arseniat, Selenit, Selenat, Vanadat und Wolframat.

10. Zusammensetzungen gemäß einem der Ansprüche 1 bis 9, dadurch gekennzeichnet, daß sie eine wirksame Menge mindestens einer Verbindung auf Lanthanid-Basis umfassen, ausgewählt unter dem Lanthan (III)-stearat, Lanthan (III)-oxid, Lanthan (III)-chlorid, Cer (III)-stearat, Cer (IV)-oxid, Cer (III)-chlorid.

11. Zusammensetzung gemäß einem der Ansprüche 1 bis 10, dadurch gekennzeichnet, daß die eingesetzte Menge an Verbindung(en) auf Lanthanid-Basis derart bestimmt wird, daß $0{,}1 \times 10^{-3}$ bis $100 \times 10^{-3}$ und vorzugsweise $0{,}2 \times 10^{-3}$ bis $30 \times 10^{-3}$ Atom-g Metall, gehörend zur Gruppe der Lanthanide, pro 100 g Polyamid eingebracht werden.

12. Zusammensetzungen gemäß einem der Ansprüche 1 bis 11, dadurch gekennzeichnet, daß das Polyamid ausgewählt ist aus der Gruppe, bestehend aus : den Polyamiden, erhalten durch Polykondensation von aliphatischen, gesättigten Dicarbonsäuren mit 6 bis 12 Kohlenstoffatomen mit gesättigten, aliphatischen, biprimären Diaminen mit 6 bis 12 Kohlenstoffatomen ; den Polyaminosäuren, erhalten entweder durch direkte Homopolykondensation von ω-Aminoalkansäuren mit einer Kohlenwasserstoffkette von 4 bis 12 Kohlenstoffatomen oder durch hydrolytische Öffnung und Polymerisation von Lactamen, die von diesen Säuren abgeleitet sind ; den Copolyamiden, die erhalten sind aus den Ausgangs-Monomeren der vorstehend genannten Polyamide, wobei die Säurekomponente dieser Copolyamide außerdem teilweise aus Terephthalsäure und/oder Isophthalsäure bestehen kann ; und den Gemischen ähnlicher Polyamide.

13. Zusammensetzungen gemäß einem der Ansprüche 1 bis 12, dadurch gekennzeichnet, daß sie roten Phosphor enthalten in Mengenanteilen zwischen 0,02 und 25 Gew.% und vorzugsweise zwischen

0,2 und 15 Gew.%, bezogen auf das Gesamtgewicht der Zusammensetzungen.

14. Zusammensetzungen gemäß einem der Ansprüche 1 bis 13, dadurch gekennzeichnet, daß der rote Phosphor sich in Form von Teilchen befindet, die mittels eines Polymerenhäutchens umhüllt sind.

15. Zusammensetzungen gemäß Anspruch 14, dadurch gekennzeichnet, daß das Umhüllungspolymere ausgewählt ist aus der Gruppe, bestehend aus : Epoxyharzen, Polymeren mit ungesättigten Maleinsäure-, Fumarsäure- oder Allylbindungen, gesättigten Polyestern, thermoplastischen Phenol-Formaldehyd-Polykondensaten, Phenol-Isobutyraldehyd-Polykondensaten.

16. Zusammensetzungen gemäß einem der Ansprüche 1 bis 15, dadurch gekennzeichnet, daß sie außerdem 50 bis 60 %, bezogen auf das Gesamtgewicht der Zusammensetzungen, Glasfasern enthalten.

17. Geformte Gegenstände, hergestellt aus den Zusammensetzungen gemäß einem der Ansprüche 1 bis 16.